(19) **Europäisches Patentamt / European Patent Office / Office européen des brevets**

(11) **EP 4 557 282 A1**

(12) **EUROPEAN PATENT APPLICATION**
published in accordance with Art. 153(4) EPC

(43) Date of publication:
**21.05.2025 Bulletin 2025/21**

(21) Application number: **23880182.3**

(22) Date of filing: **17.10.2023**

(51) International Patent Classification (IPC):
*G10L 21/0272* (2013.01)     *G10L 25/30* (2013.01)
*G10L 25/18* (2013.01)       *G10L 17/02* (2013.01)
*G10L 15/25* (2013.01)       *H04N 21/439* (2011.01)
*G06N 3/045* (2023.01)

(52) Cooperative Patent Classification (CPC):
**G06N 3/045; G10L 15/25; G10L 17/02;
G10L 21/0272; G10L 25/18; G10L 25/30;
H04N 21/439**

(86) International application number:
**PCT/KR2023/016060**

(87) International publication number:
**WO 2024/085605 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022   KR 20220133577
20.02.2023   KR 20230022449**

(71) Applicant: **Samsung Electronics Co., Ltd.
Suwon-si, Gyeonggi-do 16677 (KR)**

(72) Inventors:
• **KIM, Kyungrae**
  Suwon-si, Gyeonggi-do 16677 (KR)
• **NAM, Woohyun**
  Suwon-si, Gyeonggi-do 16677 (KR)
• **KIM, Jungkyu**
  Suwon-si, Gyeonggi-do 16677 (KR)
• **EOM, Deokjun**
  Suwon-si, Gyeonggi-do 16677 (KR)

(74) Representative: **Appleyard Lees IP LLP
15 Clare Road
Halifax HX1 2HY (GB)**

(54) **DEVICE FOR PROCESSING VIDEO, AND OPERATING METHOD THEREFOR**

(57)     An electronic device for processing a video including an image signal and a mixed audio signal, includes: a memory configured to store at least one program for processing the video; and at least one processor configured to: generate, from the image signal and the mixed audio signal, audio-related information indicating a degree of overlap in a plurality of sound sources included in the mixed audio signal by using a first artificial intelligence (AI) model; and separate at least one of the plurality of sound sources included in the mixed audio signal from the mixed audio signal, by applying the audio-related information to a second AI model.

FIG. 3

EP 4 557 282 A1

## Description

[Technical Field]

The disclosure relates to an apparatus for processing a video and an operation method of the apparatus, and more particularly, to an apparatus for separating at least one sound source from among a plurality of sound sources included in a mixed audio signal with respect to video including an image signal and the mixed audio signal, and an operation method of the apparatus.

[Background Art]

As an environment in which video is watched gradually becomes more diverse, a method enabling a user to interact with videos is increasing. For example, when video is played on a screen supporting a touch input (e.g., a smartphone or a tablet), a user can enable the focus of the video to be fixed to a specific character by using a method of enlarging a partial area of the video (e.g., an area where the specific character appear) through a touch input. Then, intuitive feedback can be provided to the user by reflecting the fixed focus in an audio output. To this end, it is necessary to first separate sound sources (voices) from the video.

[Disclosure]

[Technical Solution]

According to an aspect of the disclosure, an electronic device for processing a video including an image signal and a mixed audio signal, the electronic device includes: at least one processor; and a memory configured to store at least one program for processing the video. By executing the at least one program, the at least one processor is configured to: generate, from the image signal and the mixed audio signal, audio-related information indicating a degree of overlap in a plurality of sound sources included in the mixed audio signal by using a first artificial intelligence (AI) model.

In an embodiment, the at least one processor is configured to separate at least one of the plurality of sound sources included in the mixed audio signal from the mixed audio signal, by applying the audio-related information to a second AI model.

In an embodiment, the audio-related information includes a map indicating the degree of overlap in the plurality of sound sources, and each bin of the map has a probability value corresponding to a degree to which one of the plurality of sound sources overlap with another in a time-frequency domain.

In an embodiment, the first AI model includes: first submodel configured to generate, from the image signal, a plurality of pieces of mouth movement information representing temporal pronouncing information of a plurality of speakers corresponding to the plurality of sound sources; and a second submodel configured to generate, from the mixed audio signal, the audio-related information, based on the plurality of pieces of mouth movement information.

In an embodiment, the first AI model is trained by comparing training audio-related information estimated from a training image signal and a training audio signal with a ground truth, and wherein the ground truth is generated by a product operation between a plurality of probability maps generated from a plurality of spectrograms generated based on each of a plurality of individual training sound sources included in the training audio signal.

In an embodiment, each of the plurality of probability maps is generated by MaxClip $(\log(1 + \|F\|_2), 1)$, where $\|F\|_2$ is a size of a corresponding spectrogram from among the plurality of spectrograms, and MaxClip $(x, 1)$ is a function that outputs x when x is less than 1, and outputs 1 when x is equal to or greater than 1.

In an embodiment, the second AI model includes an input layer, an encoder including a plurality of feature layers, and a bottleneck layer, and wherein the applying of the audio-related information to the second AI model includes at least one of applying of the audio-related information to the input layer, applying of the audio-related information to each of the plurality of feature layers included in the encoder, or applying of the audio-related information to the bottleneck layer.

In an embodiment, the at least one processor is further configured to: generate, from the mixed audio signal or from the mixed audio signal and visual information, number-of-speakers related information included in the mixed audio signal by using a third AI model; generate, from the image signal and the mixed audio signal, the audio-related information based on the number-of-speakers related information by using the first AI model; and separate, from the mixed audio signal, at least one of the plurality of sound sources included in the mixed audio signal by applying the number-of-speakers related information and the audio-related information to the second AI model.

In an embodiment, the visual information includes at least one key frame included in the image signal, and the at least one key frame includes a facial area including lips of at least one speaker corresponding to at least one sound source included in the mixed audio signal.

In an embodiment, the number-of-speakers related information included in the mixed audio signal includes at least one of first number-of-speakers related information about the mixed audio signal or second number-of-speakers related information about the visual information.

In an embodiment, the first number-of-speakers related information includes a probability distribution of a number of speakers corresponding to the plurality of sound sources included in the mixed audio signal, and wherein the second number-of-speakers related information includes a probability distribution of the number of speakers included in the visual information.

In an embodiment, the applying of the number-of-speakers related information to the second AI model includes at least one of applying of the number-of-speakers related information to the input layer, applying of the number-of-speakers related information to each of the plurality of feature layers included in the encoder, or applying of the number-of-speakers related information to the bottleneck layer.

In an embodiment, the at least one processor is further configured to: obtain a plurality of pieces of mouth movement information associated with the plurality of speakers from the image signal; and separate, from the mixed audio signal, at least one of the plurality of sound sources included in the mixed audio signal by applying the obtained plurality of pieces of mouth movement information to the second AI model.

In an embodiment, the electronic device further includes: an input/output interface configured to display a screen on which the video is played back and receive, from a user, an input for selecting at least one speaker from among a plurality of speakers corresponding to the plurality of sound sources included in the mixed audio signal; and an audio output interface configured to output at least one sound source corresponding to the at least one speaker selected from among the plurality of sound sources included in the mixed audio signal.

In an embodiment, the at least one processor is further configured to: display, on the screen, a user interface for adjusting a volume of at least one sound source corresponding to the selected at least one speaker and receive, from the user, adjustment of the volume of the at least one sound source; and based on the adjustment of the volume of the at least one sound source, adjust the volume of the at least one sound source that is output through the audio output interface.

According to an aspect of the disclosure, a method of processing a video including an image signal and a mixed audio signal, the method includes: generating, from the image signal and the mixed audio signal, audio-related information indicating a degree of overlap in a plurality of sound sources included in the mixed audio signal by using a first artificial intelligence (AI) model.

In an embodiment, the method includes separating, from the mixed audio signal, at least one of the plurality of sound sources included in the mixed audio signal by applying the audio-related information to a second AI model.

In an embodiment, the audio-related information includes a map indicating the degree of overlap in the plurality of sound sources, and each bin of the map has a probability value corresponding to a degree to which one of the plurality of sound sources overlap with another in a time-frequency domain.

In an embodiment, the generating of the audio-related information includes: generating, from the image signal, a plurality of pieces of mouth movement information representing temporal pronouncing information of a plurality of speakers corresponding to the plurality of sound sources included in the mixed audio signal; and generating, from the mixed audio signal, the audio-related information based on the plurality of pieces of mouth movement information.

In an embodiment, the second AI model includes an input layer, an encoder including a plurality of feature layers, and a bottleneck layer, and wherein the applying of the audio-related information to the second AI model includes at least one of applying of the audio-related information to the input layer, applying of the audio-related information to each of the plurality of feature layers included in the encoder, or applying of the audio-related information to the bottleneck layer.

In an embodiment, the method further includes: generating, from the mixed audio signal or from the mixed audio signal and visual information, number-of-speakers related information included in the mixed audio signal by using a third AI model; generating, from the image signal and the mixed audio signal, the audio-related information, based on the number-of-speakers related information, by using the first AI model; and separating, from the mixed audio signal, at least one of the plurality of sound sources included in the mixed audio signal, by applying the number-of-speakers related information and the audio-related information to the second AI model.

In an embodiment, the visual information includes at least one key frame included in the image signal, and the at least one key frame includes a facial area including lips of at least one speaker corresponding to at least one sound source included in the mixed audio signal.

In an embodiment, wherein the applying of the number-of-speakers related information to the second AI model includes at least one of applying of the number-of-speakers related information to the input layer, applying of the number-of-speakers related information to each of the plurality of feature layers included in the encoder, or applying of the number-of-speakers related information to the bottleneck layer.

According to an aspect of the disclosure, provided is a non-transitory computer-readable recording medium storing computer program for processing a video including an image signal and a mixed audio signal, which, when executed by at least one processor, may cause the at least one processor to execute: generating, from the image signal and the mixed audio signal, audio-related information indicating a degree of overlap in a plurality of sound sources included in the mixed audio signal by using a first artificial intelligence (AI) model; and separating, from the mixed audio signal, at least one of the plurality of sound sources included in the mixed audio signal by applying the audio-related information to a second AI model.

[Description of Drawings]

The above and other aspects, features, and advantages of certain embodiments of the disclosure will be more apparent from the following description taken in conjunction with the accompanying drawings, in which:

FIG. 1 is a diagram for describing a situation in which a sound source is separated for each speaker included in video and playback of the video is controlled according to a result of the separation, according to an embodiment of the disclosure;

FIG. 2 is a schematic block diagram of a structure of an electronic device for processing a video, according to an embodiment of the disclosure;

FIG. 3 is a diagram expressing, as a plurality of artificial intelligence (AI) models, a program allowing an electronic device to perform a method of processing a video, according to an embodiment of the disclosure;

FIG. 4a illustrates a structure and an input-output relationship of a sound source characteristic analysis model according to an embodiment of the disclosure;

FIG. 4b illustrates a structure and an input-output relationship of a first submodel included in a sound source characteristic analysis model according to an embodiment of the disclosure;

FIG. 4c illustrates a structure and an input-output relationship of a second submodel included in a sound source characteristic analysis model according to an embodiment of the disclosure;

FIG. 5 is a view for explaining an exemplary structure of a sound source separation model and a method of applying audio-related information to the sound source separation model, according to an embodiment of the disclosure;

FIGS. 6a and 6b illustrate an input-output relationship of a number-of-speakers analysis model, according to an embodiment of the disclosure;

FIG. 7 is a diagram for explaining a method of applying number-of-speakers related information to a sound source separation model, according to an embodiment of the disclosure;

FIG. 8 is a view for explaining a method of training a sound source characteristic analysis model, according to an embodiment of the disclosure;

FIG. 9 is a flowchart of a method of processing a video, according to an embodiment of the disclosure;

FIGS. 10a and 10b show experimental results regarding the performance of an electronic device and method for processing a video, according to an embodiment of the disclosure;

FIGS. 11a and 11b show experimental results of comparing the performance of an electronic device and method for processing a video, according to an embodiment of the disclosure, with the related art;

FIG. 12 illustrates a method of controlling playback of video based on a result of processing the video, according to an embodiment of the disclosure;

FIG. 13 illustrates a method of controlling playback of video based on a result of processing the video, according to an embodiment of the disclosure;

FIG. 14 illustrates a method of controlling playback of video based on a result of processing the video, according to an embodiment of the disclosure; and

FIG. 15 illustrates a method of controlling playback of video based on a result of processing the video, according to an embodiment of the disclosure.

[Mode for Invention]

In the following description of the disclosure, descriptions of techniques that are well known in the art and not directly related to the disclosure are omitted. This is to clearly convey the gist of the disclosure by omitting any unnecessary explanation. Also, terms used below are defined in consideration of functions in the disclosure, and may have different meanings according to an intention of a user or operator, customs, or the like. Thus, the terms should be defined based on the description throughout the specification.

For the same reason, some elements in the drawings are exaggerated, omitted, or schematically illustrated. Also, actual sizes of respective elements are not necessarily represented in the drawings. In the drawings, the same or corresponding elements are denoted by the same reference numerals.

The advantages and features of the disclosure and methods of achieving the advantages and features will become apparent with reference to an embodiment of the disclosure described in detail below with reference to the accompanying drawings. However, this is not intended to limit the disclosure to a disclosed embodiment, and all changes, equivalents, and substitutes that do not depart from the spirit and technical scope are encompassed in the disclosure. The disclosed embodiment is provided so that the disclosure will be thorough and complete, and will fully convey the scope of the disclosure to one of ordinary skill in the art. An embodiment of the disclosure may be defined according to the claims. Like reference numerals in the drawings denote like elements. In description of an embodiment of the disclosure, certain detailed explanations of related functions or configurations are omitted when it is deemed that they may unnecessarily obscure the subject matter of the disclosure. Also, terms used below are defined in consideration of functions in the disclosure, and may have different meanings according to an intention of a user or operator, customs, or the like. Thus, the terms should be defined based on the description throughout the specification.

Each block of flowchart illustrations and combinations of blocks in the flowchart illustrations may be implemented by computer program instructions. The computer program instructions may be provided to a processor of a general-purpose computer, special purpose computer, or other programmable data processing equipment, and the instructions, which are executed via the processor of the computer or other programmable data processing equipment, may generate means for performing functions specified in the flowchart block(s). The computer program instructions may also be stored in a computer-usable or computer-readable memory that may direct a computer or other programmable data processing equipment to function in a particular manner, and the instructions stored in the computer-usable or computer-readable memory may produce a manufactured article including instruction means that perform the functions specified in the flowchart block(s). The computer program instructions may be mounted on a computer or other programmable data processing equipment.

In addition, each block of a flowchart may represent a module, segment, or portion of code, which includes one or more executable instructions for implementing specified logical function(s). According to an embodiment of the disclosure, it is also possible that the functions mentioned in the blocks occur out of order. For example, two blocks shown in succession may in fact be executed substantially concurrently, or may be executed in the reverse order according to functions.

The term "unit" or '~ er(or) 'used herein may denote a software element, or a hardware element (such as, a field-programmable gate array (FPGA) or an application-specific integrated circuit (ASIC)), and performs a certain function. The term 'unit' or '~er(or) 'may be configured to be included in an addressable storage medium or to reproduce one or more processors. According to an embodiment of the disclosure, the term 'unit' or ' ~er(or)' may include, by way of example, object-oriented software components, class components, and task components, and processes, functions, attributes, procedures, subroutines, segments of a program code, drivers, firmware, a micro code, a circuit, data, a database, data structures, tables, arrays, and variables. Functions provided through a specific component or a specific '~ unit' may be combined to reduce the number, or may be separated into additional components. According to an embodiment of the disclosure, the 'unit' or '~er(or)' may include one or more processors.

The term "couple" and the derivatives thereof refer to any direct or indirect communication between two or more elements, whether or not those elements are in physical contact with each other. The terms "transmit", "receive", and "communicate" as well as the derivatives thereof encompass both direct and indirect communication. The terms "include" and "comprise", and the derivatives thereof refer to inclusion without limitation. The term "or" is an inclusive term meaning "and/or". The phrase "associated with," as well as derivatives thereof, refer to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" refers to any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of A, B, and C" includes any of the following combinations: A, B, C, A and B, A and C, B and C, and A and B and C, and any variations thereof. Similarly, the term "set" means one or more. Accordingly, the set of items may be a single item or a collection of two or more items.

An embodiment of the disclosure will now be described more fully with reference to the accompanying drawings.

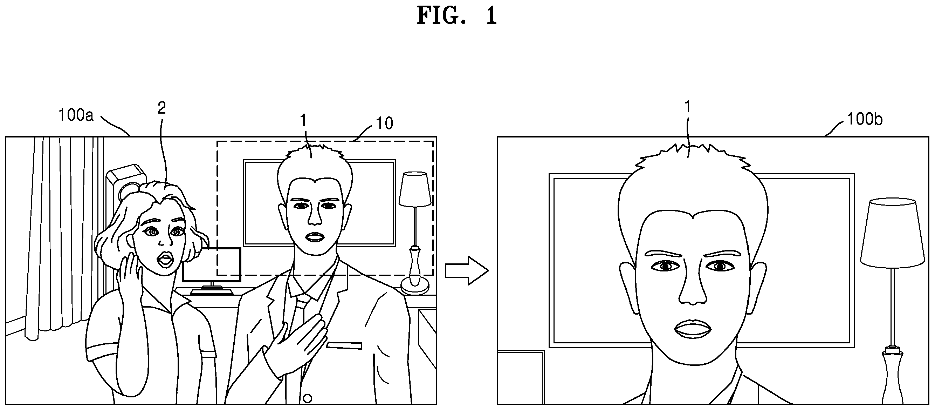

FIG. 1 is a diagram for describing a situation in which a sound source is separated for each speaker included in video and playback of the video is controlled according to a result of the separation, according to an embodiment of the disclosure.

A first screen 100a of FIG. 1 corresponds to a scene of a video being played back, and a second screen 100b of FIG. 1 is an image obtained by enlarging a partial area 10 of the first screen 100a. Two people 1 and 2 appear on the first screen 100a. Hereinafter, people appearing in video are referred to as 'speakers' included in the video.

When both a first speaker 1 and a second speaker 2 are speaking in the video, the voices of the two speakers 1 and 2 may be mixed and output. Hereinafter, a voice and a sound source are used with the same meaning.

As shown in FIG. 1, in order for the voice of the first speaker 1 to be emphasized and output or for only the voice of the first speaker 1 to be output when the partial area 10 on the first screen 100a is enlarged and thus the second screen 100b is displayed, the voice of the first speaker 1, individual sound sources need to be separated from an audio signal in which the voice of the second speaker 2, and (in some cases) the voice of a third speaker who does not appear on the first screen 100a are mixed. Therefore, a method of separating individual sound sources from a mixed audio signal included in video will now be described in detail, and then an embodiment of controlling video playback according to a result of the separation will now be described.

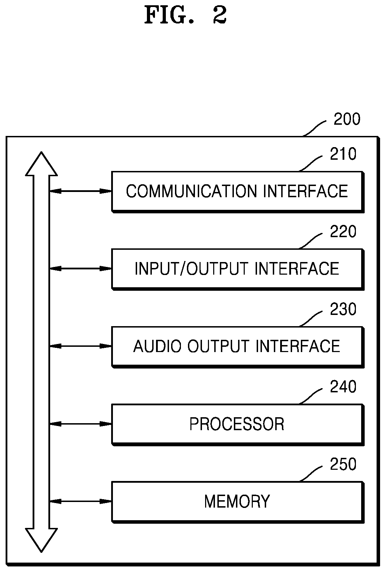

FIG. 2 is a schematic block diagram of a structure of an electronic device 100 for processing a video, according to an embodiment of the disclosure.

The electronic device 200 shown in FIG. 2 may be a display device (e.g., a smartphone or a tablet) that plays video, or may be a separate server connected to the display device through wired or wireless communication. Methods for processing a video, according to embodiments introduced in the disclosure, may be performed by an electronic device including a display that displays video, may be performed by a separate server connected to the electronic device including the display, or may be performed jointly by the electronic device including the display and the server (processes included in the method are performed separately by the two devices).

In one embodiment, the electronic device 200 of FIG. 2 is an electronic device including a display and performs the video processing methods described herein. However, as described above, embodiments of the disclosure are not limited thereto, and it is obvious that there is a separate server connected to an electronic device including a display or the server may perform some or all of the processes. Accordingly, it should be interpreted that, among the operations performed by the electronic device 200 in embodiments described below, remaining operations except for an operation of displaying video on a display may be performed by a separate device such as a server, even without further explanation.

Referring to FIG. 2, the electronic device 200 according to an embodiment of the disclosure may include a communication interface 210, an input/output interface 220, an audio output interface 230, a processor 240, and a memory 250. However, the components of the electronic device 200 are not limited to the above-described examples, and the electronic device 200 may include more or fewer components than the aforementioned components. According to an embodiment of the disclosure, some or all of the communication interface 210, the input/output interface 220, the memory 250, the processor 240, and the memory 250 may be implemented as a single chip, and the processor 240 may include one or more processors.

The communication interface 210 is a component for transmitting and receiving signals (e.g., control commands and data) with an external device by wire or wirelessly, and may be configured to include a communication chipset that supports various communication protocols. The communication interface 210 may receive a signal from an external source and output the signal to the processor 240, or may transmit a signal output by the processor 240 to an external source.

The input/output interface 220 may include an input interface (e.g., a touch screen, a hard button, or a microphone) for receiving control commands or information from a user, and an output interface (e.g., a display panel) for displaying an execution result of an operation under the user's control or a state of the electronic device 200. According to an embodiment, the input/output interface 220 may display video currently being played back, and may receive, from the user, an input for enlarging a partial area of the video or selecting a specific speaker or a specific sound source included in the video.

The audio output interface 230, which is a component for outputting an audio signal included in the video, may be an output device (e.g., an embedded speaker) that is built into the electronic device 200 and is able to directly reproduce sound corresponding to the audio signal, may be an interface (e.g., a 3.5 mm terminal, a 4.4 mm terminal, an RCA terminal, or a USB) that allows the electronic device 200 to transmit and receive an audio signal to and from a wired audio playback device (e.g., a speaker, a sound bar, an earphone, or a headphone), or may be an interface (e.g., a Bluetooth module or a wireless LAN (WLAN) module) that allows the electronic device 200 to transmit and receive an audio signal to and from a wireless audio playback device (e.g., a wireless earphones, a wireless headphone, or a wireless speaker).

The processor 240 is a component that controls a series of processes so that the electronic device 200 operates according to embodiments described below, and may include one or a plurality of processors. The one or plurality of processors may be a general-purpose processor such as a central processing unit (CPU), an application processor (AP), or a digital signal processor (DSP), a graphics-only processor such as a graphics processing unit (GPU) or a vision processing unit (VPU), or an artificial intelligence (AI)-only processor such as a neural processing unit (NPU). In an embodiment, when the one or plurality of processors are AI-only processors, the AI-only processors may be designed in a hardware structure specialized for processing a specific AI model.

The processor 240 may write data to the memory 250 or read data stored in the memory 250, and, in particular, may execute a program stored in the memory 250 to process data according to a predefined operation rule or an AI model. Accordingly, the processor 240 may perform operations described in the following embodiments, and operations described as being performed by the electronic device 200 in the following embodiments may be considered as being performed by the processor 240 unless otherwise specified.

The memory 250, which is a component for storing various programs or data, may be composed of storage media, such as read-only memory (ROM), random access memory (RAM), hard disks, compact disc (CD)-ROM, and digital versatile discs (DVDs), or a combination thereof. The memory 250 may not exist separately but may be included in the processor 240. The memory 250 may be implemented as a volatile memory, a non-volatile memory, or a combination of a volatile memory and a non-volatile memory. The memory 250 may store a program for performing operations according to embodiments of the disclosure that will be described later. The memory 250 may provide stored data to the processor 240, in response to a request by the processor 240.

A method of separating individual sound sources from a mixed audio signal included in video will now be described in detail, and then embodiments of controlling video playback according to a result of the separation will now be described.

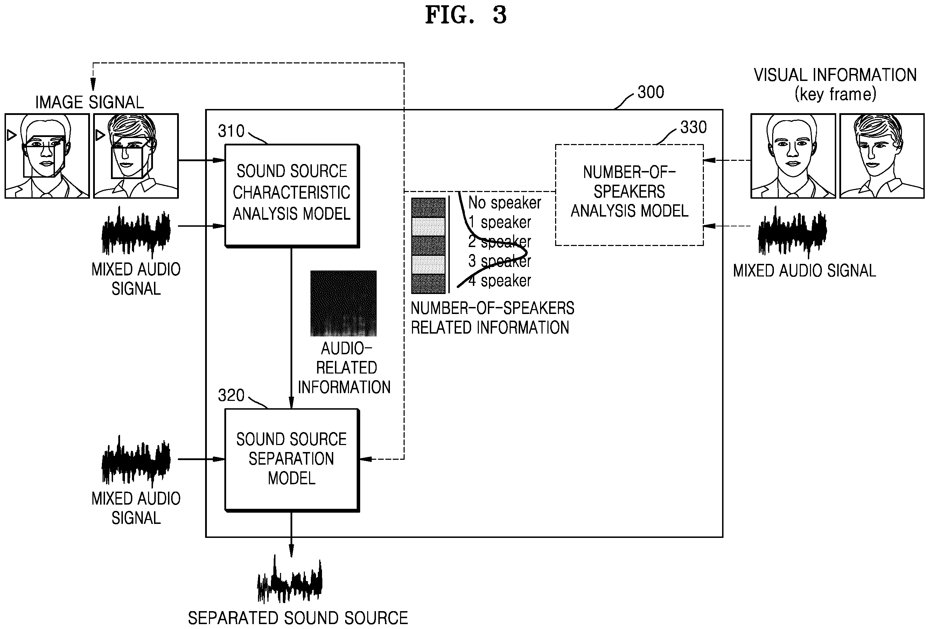

FIG. 3 is a diagram expressing, as a plurality of AI models, a program allowing an electronic device to perform a method of processing a video, according to an embodiment of the disclosure. Models 310, 320, and 330 shown in FIG. 3 may be obtained by classifying operations performed by the processor 240 executing a program 300 stored in the memory 250 according to functions. Accordingly, the operations described below as being performed by the models 310, 320, and 330 shown in FIG. 3 may be considered as being actually performed by the processor 240.

A function related to an AI model according to an embodiment of the disclosure may be operated through the processor 240 and the memory 250. The processor 240 may control input data to be processed according to a predefined operation rule or AI model stored in the memory 250.

The predefined operation rule or AI model is characterized in that it is created through learning. Here, being created through learning means that a basic AI model is trained using a plurality of training data by a learning algorithm, so that a predefined operation rule or AI model set to perform desired characteristics (or a desired purpose) is created. Such learning may be performed in a device itself on which AI according to the disclosure is performed, or may be performed through a separate server and/or system. Examples of the learning algorithm include, but are not limited to, supervised learning, unsupervised learning, semi-supervised learning, or reinforcement learning.

The AI model may be composed of a plurality of neural network layers. Each of the plurality of neural network layers has a plurality of weight values, and performs a neural network operation through an operation between an operation result of a previous layer and the plurality of weight values. The plurality of weight values of the plurality of neural network layers may be optimized by a learning result of the AI model. In an embodiment,, the plurality of weight values may be updated so that a loss value or a cost value obtained from the AI model is reduced or minimized during a learning process. An artificial neural network may include a deep neural network (DNN), for example, a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), or a Deep Q-Networks, but embodiments of the disclosure are not limited thereto.

Referring to FIG. 3, a program 300 for processing a video, according to an embodiment, may include a sound source characteristic analysis model 310, a sound source separation model 320, and a number-of-speakers analysis model 330. The sound source characteristic analysis model 310, the sound source separation model 320, and the number-of-speakers analysis model 330 may be referred to as a first AI model, a second AI model, and a third AI model, respectively.

According to an embodiment, the sound source characteristic analysis model 310 generates audio-related information indicating the degree of overlap in a plurality of sound sources included in a mixed audio signal from an image signal and the mixed audio signal both included in video. In this case, the image signal refers to an image (i.e., one or more frames) including a facial area including the lips of a speaker appearing in the video. The facial area including the lips may include the lips and a facial part within a certain distance from the lips. For example, the image signal is an image including a facial area including the lips of a first speaker appearing in the video, and may include 64 frames of a 88x88 size. As will be described later, the sound source characteristic analysis model 310 may generate the speaker's mouth movement information representing the speaker's temporal pronouncing information by using the image signal.

According to an embodiment, the image signal may be a plurality of images including a facial area including the lips of a plurality of speakers appearing in the video. For example, when two speakers appear in the video, the image signal may include a first image including a facial area including the lips of a first speaker and a second image including a facial area including the lips of a second speaker.

According to an embodiment, the image signal may be an image containing a facial area including the lips of as many speakers as the number of speakers determined based on number-of-speakers distribution information generated by the number-of-speakers analysis model 330. In other words, the number of images included in the image signal may be determined based on the number-of-speakers distribution information generated by the number-of-speakers analysis model 330. In an embodiment, when the probability that there are three speakers is highest according to the number-of-speakers distribution information, the image signal may include three images corresponding to the three speakers.

According to an embodiment, the audio-related information includes a map indicating the degree of overlap in the plurality of sound sources. The map indicates, as a probability, a degree to which a plurality of sound sources (corresponding to a plurality of speakers) overlap with one another in a time-frequency domain. In other words, each bin of the map in the audio-related information has a probability value corresponding to the degree to which the voices (sound sources) of speakers speaking simultaneously in a corresponding time-frequency domain overlap with one another. The term 'probability' means that the degree to which multiple sound sources overlap with one another is expressed as a value between 0 and 1. For example, a value in a specific bin may be determined according to the volume of each sound source in a corresponding time-frequency domain.

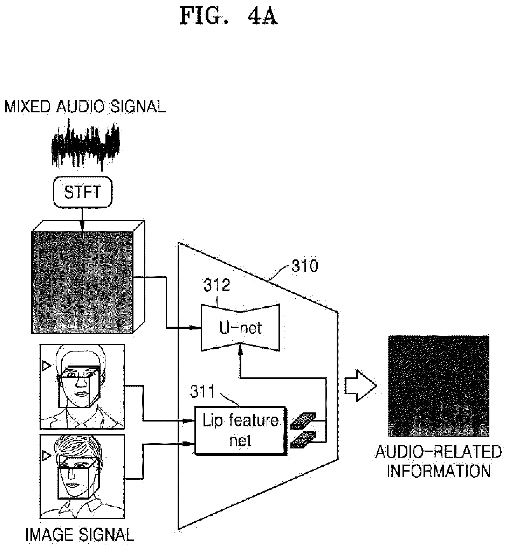

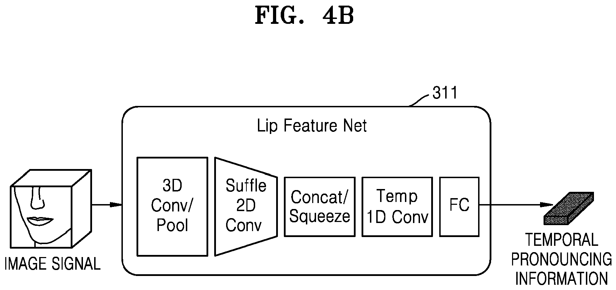

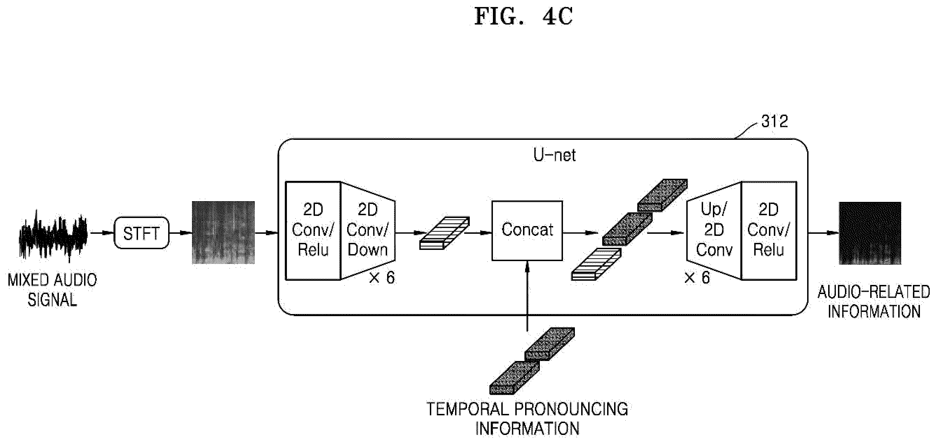

A detailed structure and a detailed operation of the sound source characteristic analysis model 310 will be described later with reference to FIGS. 4a, 4b, and 4c.

According to an embodiment, the sound source separation model 320 separates, from the mixed audio signal, at least one sound source among the plurality of sound sources included in the mixed audio signal, by using the audio-related information. According to an embodiment, the sound source separation model 320 may separate a sound source corresponding to a target speaker among the plurality of sound sources included in the mixed audio signal from the mixed audio signal, by further using an image signal corresponding to the target speaker, in addition to the audio-related information.

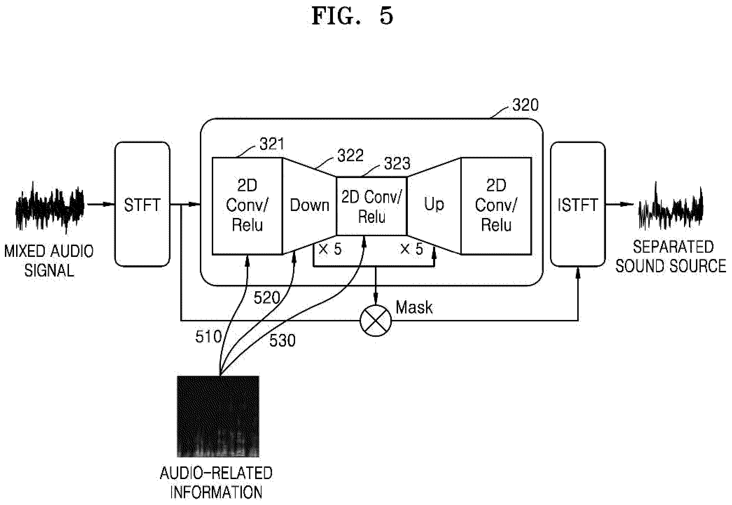

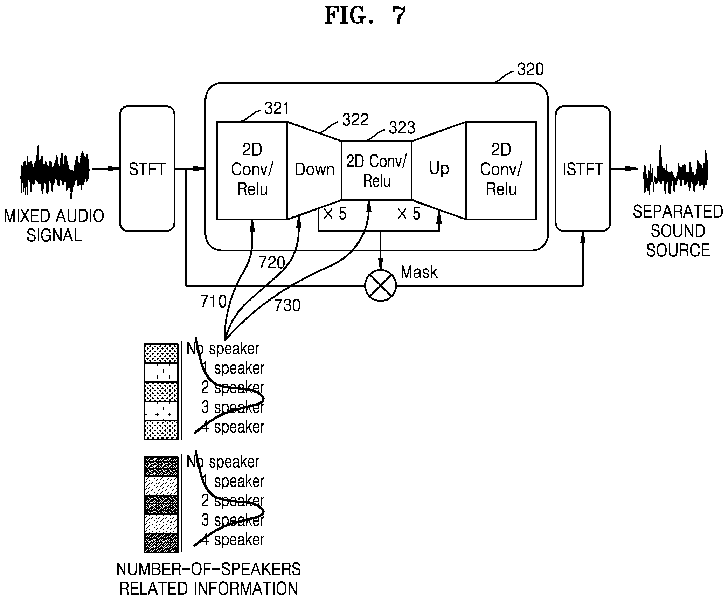

The sound source separation model 320 may include an input layer 321 of FIG. 7, an encoder 322 of FIG. 7 including a plurality of feature layers, and a bottleneck layer 323 of FIG. 7. As will be described later, the audio-related information may be applied to at least one of the input layer 321 of FIG. 7, each of the plurality of feature layers included in the encoder 322 of FIG. 7, or the bottleneck layer 323 of FIG. 7. In other words, the processor 240 may apply the audio-related information to at least one of the input layer 321 of FIG. 7, each of the plurality of feature layers included in the encoder 322 of FIG. 7, or the bottleneck layer 323 of FIG. 7. How the audio-related information is applied to the sound source separation model 320 will be described later with reference to FIG. 5.

Any neural network model capable of separating individual sound sources from an audio signal in which a plurality of sound sources are mixed may be employed as the sound source separation model 320. For example, a model such as "VISUAL VOICE", which operates by receiving a speaker's lip movement information, the speaker's face information, and a mixed audio signal and separating a target speaker's voice (sound source), may be employed. A detailed operation of the "VISUAL VOICE" is disclosed in the following document: GAO, Ruohan; GRAUMAN, Kristen. Visualvoice: Audio-visual speech separation with cross-modal consistency. In: 2021 IEEE/CVF Conference on Computer Vision and Pattern Recognition (CVPR). IEEE, 2021. p. 15490-15500.

A conventional sound source separation model, such as "VISUAL VOICE", operates using a method in which an encoder within a model directly analyzes an area where multiple voices overlap and separates a sound source, without additional information generated by separately analyzing a mixed audio signal. Therefore, in a conventional sound source separation technology, when a plurality of voices included in a mixed audio signal overlap in the time-frequency domain, separation performance is drastically reduced according to the features of the plurality of voices. For example, when the voices (sound sources) of two male speakers are mixed, the two voices overlap in a significant portion of the time-frequency domain, and thus are more difficult to accurately separate from each other than when the voice (sound source) of one male speaker (sound source) and the voice (sound source) of one female speaker are mixed. In an actual-use environment, the characteristics of the sound sources included in the mixed audio signal and the number of speakers corresponding to them may not be specified, and separation performance is still degraded due to various noises that occur in a situation where a surrounding environment changes over time.

According to an embodiment of the disclosure, the electronic device 200 may generate the audio-related information indicating the degree of overlap in the plurality of sound sources included in the mixed audio signal from the image signal and the mixed audio signal included in the video, and may separate a sound source in an actual-use environment in which various noises are mixed or may achieve excellent separation performance even for an audio signal mixed with sound sources (voices) having similar characteristics, by applying the audio-related information to the sound source separation model 320, because the audio-related information serves as an attention map in the sound source separation model 320. The attention map refers to information indicating the relative importance of individual data (i.e., each component of a vector) within input data (i.e., the vector) to better achieve a target task.

According to an embodiment, the number-of-speakers analysis model 330 may generate number-of-speakers related information included in the mixed audio signal from the mixed audio signal or from the mixed audio signal and visual information. The number-of-speakers related information includes a probability distribution of the number of speakers. In an embodiment, the number-of-speakers related information may be an N-dimensional feature vector including the probabilities of the number of speakers included in mixed sound sources being 0, 1, ..., and N. According to an embodiment, the number-of-speakers related information may include at least one of first number-of-speakers related information about the mixed audio signal or second number-of-speakers related information about the visual information. In an embodiment, the first number-of-speakers related information may include a probability distribution of the number of speakers corresponding to the plurality of sound sources included in the mixed audio signal, and the second number-of-speakers related information may include a probability distribution of the number of speakers included in the visual information. According to an embodiment, the number-of-speakers analysis model 330 is an optional component and accordingly may be omitted.

A conventional sound source separation model, such as the above-described "VISUAL VOICE", is trained to separate the voice (sound source) of a single target speaker from a mixed audio signal or is trained to separate the voices (sound sources) of a specific number of target speakers (persons). Therefore, when the conventional sound source separation model is used and the mixed audio signal includes voices (sound sources) corresponding to multiple speakers, a separate model is needed for each speaker to separate all of the individual voices (sound sources). In addition, when the number of speakers corresponding to the plurality of sound sources included in the mixed audio signal is different from the number of trained target speakers, separation performance decreases rapidly. On the other hand, the electronic device 200 according to an embodiment of the disclosure may separate all of the plurality of individual sound sources included in the mixed audio signal by using only a single model by applying the number-of-speakers related information to the sound source separation model 320, and provides excellent separation performance regardless of the number of speakers.

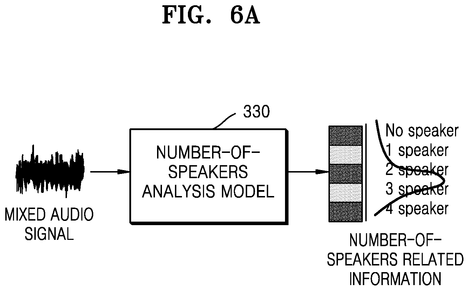

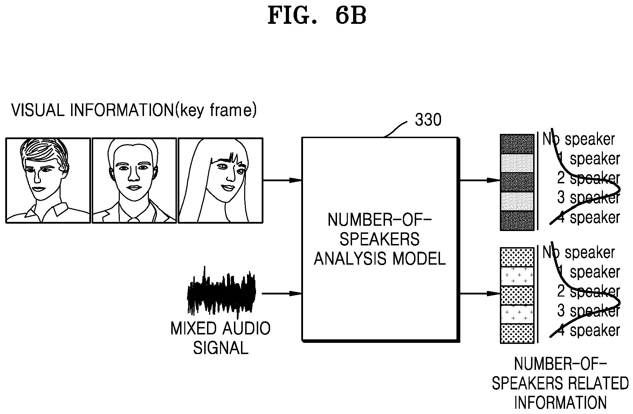

A detailed operation of the number-of-speakers analysis model 330 will be described later with reference to FIGS. 6a, 6b, and 7.

FIGS. 4a, 4b, and 4c are diagrams for explaining a detailed structure and a detailed operation of a sound source characteristic analysis model according to an embodiment. In detail, FIG. 4a illustrates a structure and an input-output relationship of the sound source characteristic analysis model 310 according to an embodiment of the disclosure, FIG. 4b illustrates a structure and an input-output relationship of a first submodel 311 included in the sound source characteristic analysis model 310 according to an embodiment of the disclosure, and FIG. 4c illustrates a structure and an input-output relationship of a second submodel 312 included in the sound source characteristic analysis model 310 according to an embodiment of the disclosure.

According to an embodiment, the sound source characteristic analysis model 310 receives the image signal and the mixed audio signal and outputs the audio-related information. The operation of the sound source characteristic analysis model 310 may be performed by the first submodel 311 and the second submodel 312.

According to an embodiment, the first submodel 311 generates, from the image signal, temporal pronouncing information of a plurality of speakers corresponding to a plurality of sound sources included in the mixed audio signal. For example, the first submodel 311 may extract, from an image signal including 64 frames of 88x88 size, a feature of the speaker's mouth movement included in the image signal. In this case, the feature of the mouth movement represents the temporal pronouncing information of the speaker. According to an embodiment, the first submodel 311 may include a first layer composed of a three-dimensional (3D) convolutional layer and a pooling layer, a second layer (Shuffle) composed of a two-dimensional (2D) convolutional layer, a third layer for combining and size converting feature vectors, a fourth layer composed of an one-dimensional (1D) convolutional layer, and a fifth layer composed of a fully connected layer.

According to an embodiment, the second submodel 312 generates the audio-related information from the mixed audio signal, based on temporal pronouncing information of a plurality of speakers. In an embodiment, the mixed audio signal may be converted into a vector in the time-frequency domain by Short-Time Fourier Transform (STFT), and may be input to the second submodel 312. In the example of FIG. 4a, the vector in the time-frequency domain into which the mixed audio signal is converted may be 2x256x256-dimensional data with a real part and an imaginary part. According to an embodiment, the second submodel 312 may include a first layer composed of a 2D convolutional layer and a rectified linear unit (ReLU) activation function, a second layer (encoder) composed of a 2D convolutional layer to downscale a feature vector, a third layer that concatenates a result of the downscaling with the temporal pronouncing information generated in the first submodel 311 (i.e., a feature vector for the speaker's mouth movement), a fourth layer (decoder) composed of a 2D convolutional layer to upscale a feature vector, and a fifth layer composed of a 2D convolutional layer and a ReLU activation function. As shown in FIG. 4c, the temporal pronouncing information generated in the first submodel 311 is applied between the encoder and the decoder of the second submodel 312. In the example of FIGS. 4a, 4b, and 4c, the audio-related information generated in the second submodel 312 may be data with dimensions of 1x256x256.

FIG. 5 is a view for explaining an exemplary structure of a sound source separation model and a method of applying audio-related information to the sound source separation model, according to an embodiment of the disclosure.

Referring to FIG. 5, according to an embodiment of the disclosure, the sound source separation model 320 may include an input layer 321, an encoder 322 including a plurality of feature layers, and a bottleneck layer 323. The sound source separation model 320 may further include a decoder for upscaling, and an output layer consisting of a 2D convolutional layer and a ReLU activation function. According to an embodiment, the input layer 321 may be composed of a 2D convolutional layer and a ReLU activation function, the encoder 322 may be composed of a plurality of convolutional layers for downscaling, and the bottleneck layer 323 may be composed of a 2D convolutional layer and a ReLU activation function.

According to an embodiment, the audio-related information may be applied to at least one of the input layer 321, each of the plurality of feature layers included in the encoder 322, or the bottleneck layer 323. In other words, the audio-related information may be applied to the sound source separation model 320, as shown by arrows 510, 520, and 530 shown in FIG. 5. The arrow 510 indicates that the audio-related information is concatenated with the mixed audio signal and applied to the input layer 321, the arrow 520 indicates that the audio-related information is applied to each of the plurality of feature layers included in the encoder 322, and the arrow 530 indicates that the audio-related information is concatenated with an output of the encoder 322 and applied to the bottleneck layer 323 and then transmitted to the decoder.

In order for the audio-related information to be applied to the sound source separation model 320, the audio-related information needs to be concatenated with data input to a corresponding layer (i.e., an output of a previous layer). Taking the case of the arrow 510 as an example, the mixed audio signal is converted to the time-frequency domain and the mixed audio signal is input to the input layer 321. Therefore, in order to apply the audio-related information to the input layer 321, a result of the time-frequency domain conversion of the mixed audio signal needs to be concatenated with the audio-related information. In the above-described example, a vector with dimensions of 2 x 256 x 256, which is the result of the time-frequency domain conversion of the mixed audio signal, is concatenated with the audio-related information with dimensions of 1 x 256 x 256, and finally a vector with dimensions of 3 x 256 x 256 is input to the input layer 321.

FIGS. 6a and 6b illustrate an input-output relationship of the number-of-speakers analysis model 330, according to an embodiment of the disclosure. FIG. 7 is a diagram for explaining a method of applying number-of-speakers related information to a sound source separation model, according to an embodiment of the disclosure.

Referring to FIG. 6a, according to an embodiment of the disclosure, the number-of-speakers analysis model 330 may generate first number-of-speakers related information about the mixed audio signal from the mixed audio signal. As described above, the number-of-speakers related information includes a probability distribution of the number of speakers. For example, the number-of-speakers related information may be an N-dimensional feature vector including the probabilities of the number of speakers included in mixed sound sources being 0, 1, ..., and N. When the first number-of-speakers related information generated from the mixed audio signal is applied to the sound source separation model 320, for example, robust separation performance may be achieved even in a situation where the number of speakers changes within a unit section of the mixed audio signal or the number of speakers may not be specified, like in the case when only the first speaker speaks, the first speaker and the second speaker speak simultaneously from a certain point in time, and then only the first speaker speaks again.

Referring to FIG. 6b, according to an embodiment of the disclosure, the number-of-speakers analysis model 330 may generate the first number-of-speakers related information about the mixed audio signal and the second number-of-speakers related information about the visual information from the mixed audio signal and the visual information. The visual information may be at least one key frame among a plurality of frames included in the image signal. The key frame may include a facial area including the lips of at least one speaker corresponding to at least one sound source included in the mixed audio signal. Because the first number-of-speakers related information is generated based on the mixed audio signal and the second number-of-speakers related information is generated based on the visual information, number-of-speakers distribution information considering both the number of speakers appearing in the video and the number of speakers not appearing in the video may be obtained. Therefore, when the first number-of-speakers related information and the second number-of-speakers related information are applied to the sound source separation model 320, a sound source that is generated in an area which does not appear in the video may be separated. For example, even when video recorded by a smartphone includes a photographer's voice, the voice of a speaker appearing in the video and the voice of the photographer may be separated.

Referring to FIG. 7, the number-of-speakers related information may be applied to at least one of the input layer 321, each of the plurality of feature layers included in the encoder 322, or the bottleneck layer 323, which are included in the sound source separation model 320. In other words, the number-of-speakers related information may be applied to the sound source separation model 320, as shown by arrows 710, 720, and 730 shown in FIG. 7. The arrow 710 indicates that the number-of-speakers related information is concatenated with the mixed audio signal and applied to the input layer 321, the arrow 720 indicates that the number-of-speakers related information is applied to each of the plurality of feature layers included in the encoder 322, and the arrow 730 indicates that the number-of-speakers related information is concatenated with an output of the encoder 322 and applied to the bottleneck layer 323 and then transmitted to the decoder.

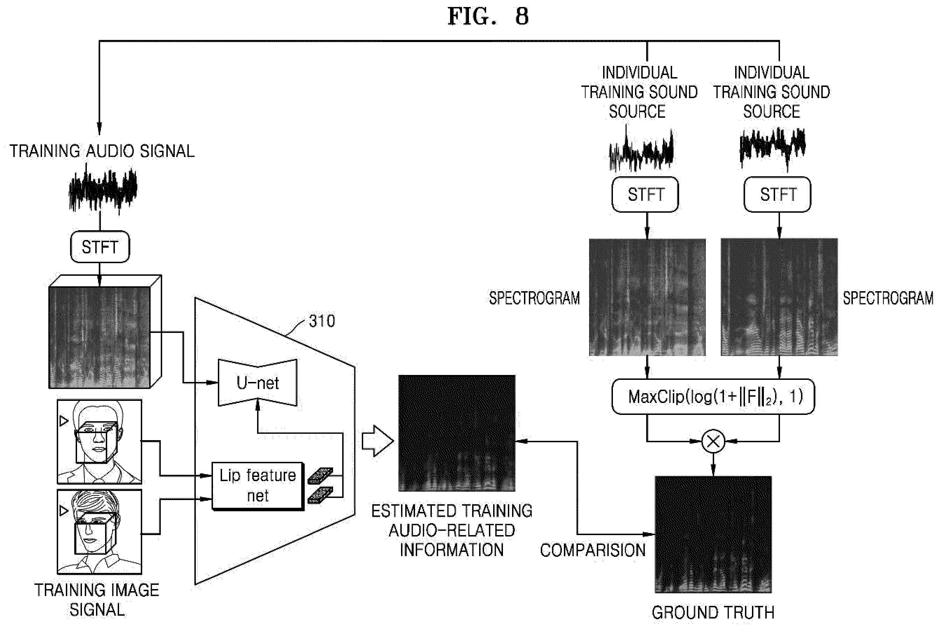

FIG. 8 is a view for explaining a method of training a sound source characteristic analysis model, according to an embodiment of the disclosure.

Referring to FIG. 8, according to an embodiment of the disclosure, the sound source characteristic analysis model 310 may be trained by comparing training audio-related information estimated from a training image signal and a training audio signal with a ground truth. The ground truth may be generated by a product operation between a plurality of probability maps generated from a plurality of spectrograms generated based on each of a plurality of individual training sound sources included in the training audio signal.

In detail, a training individual sound source may be converted into a spectrogram in the time-frequency domain by Short-Time Fourier Transform (STFT), and a corresponding probability map may be generated by applying an operation of Equation 1 to each spectrogram. The ground truth may be generated by a multiplication operation between corresponding components of the generated probability map.

[Equation 1]

$$MaxClip(\log(1+||F||_2),\ 1)$$

wherein $||F||_2$, which is a norm operation with respect to a spectrogram F, indicates the size of the spectrogram, and MaxClip (x, 1) is a function that outputs x when x is less than 1, and outputs 1 when x is equal to or greater than 1.

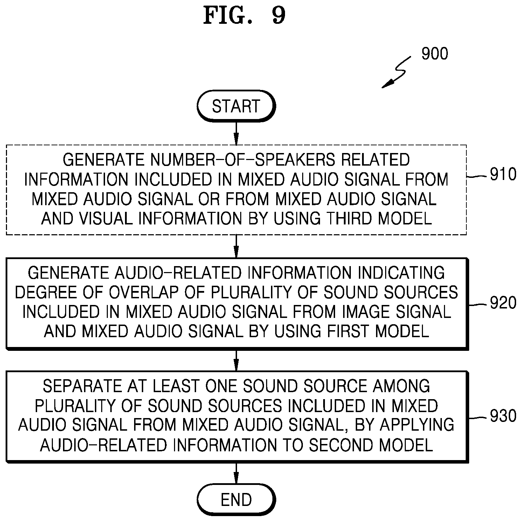

FIG. 9 is a flowchart of a method of processing a video, according to an embodiment of the disclosure. A method 900 for processing a video may be performed by the electronic device 200.

Referring to FIG. 9, in operation 910, number-of-speakers related information included in the mixed audio signal may be generated from the mixed audio signal or from the mixed audio signal and visual information by using the number-of-speakers analysis model 330. The number-of-speakers related information includes a probability distribution of the number of speakers. For example, the number-of-speakers related information may be an N-dimensional feature vector including the probabilities of the number of speakers included in mixed sound sources being 0, 1, ..., and N. According to an embodiment, the number-of-speakers related information may include at least one of first number-of-speakers related information about the mixed audio signal or second number-of-speakers related information about the visual information. As described above, operation 910 may be omitted according to implementation methods.

In operation 920, the audio-related information indicating the degree of overlap in a plurality of sound sources included in the mixed audio signal is generated from the image signal and the mixed audio signal by using a first AI model. The audio-related information includes a map indicating the degree of overlap in the plurality of sound sources corresponding to a plurality of speakers. Each bin of the map has a probability value corresponding to a degree to which one of the plurality of sound sources with another in a time-frequency domain. In other words, each bin of the map in the audio-related information has a probability value corresponding to a degree to which the voices (sound sources) of speakers speaking simultaneously in a corresponding time-frequency domain overlap with one another. The term 'probability' means that a degree to which multiple sound sources overlap with one another is expressed as a value between 0 and 1.

In operation 930, at least one sound source among the plurality of sound sources included in the mixed audio signal is separated from the mixed audio signal, by applying the audio-related information to a second AI model. When operation 910 is not omitted, in operation 930, at least one sound source among the plurality of sound sources included in the mixed audio signal is separated from the mixed audio signal by applying the audio-related information and the number-of-speakers related information to the second AI model.

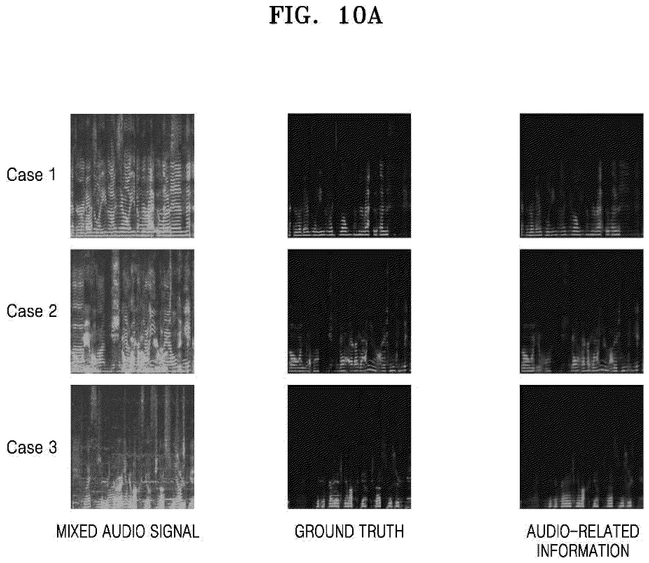

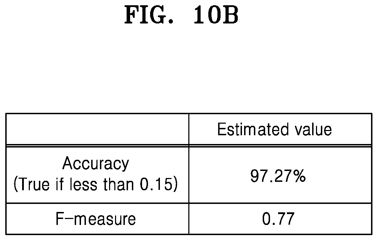

FIGS. 10a and 10b show experimental results regarding the performance of an electronic device and method for processing a video, according to an embodiment of the disclosure.

FIG. 10a shows qualitative comparison results of the mixed audio signal, the ground truth, and the audio-related information, and FIG. 10b is a table showing the quantitative comparison results. In FIG. 10a, the ground truth is generated by the process shown in FIG. 8 by using individual sound sources included in the mixed audio signal.

Referring to FIGS. 10a and 10b, in all of a case where there are many areas where a plurality of sound sources overlap (Case 1), a case where there are few overlapping areas (Case 3), and a case where the overlapping area is in between Case 1 and Case 3 (Case 2), it may be seen that the audio-related information is almost the same as the ground truth and fairly accurately reflects in which region of the time-frequency domain within the mixed audio signal the plurality of sound sources overlap. The accuracy of audio-related information estimation of the sound source separation model 320 was measured at 97.27%, and the F-score (F-measure) was 0.77.

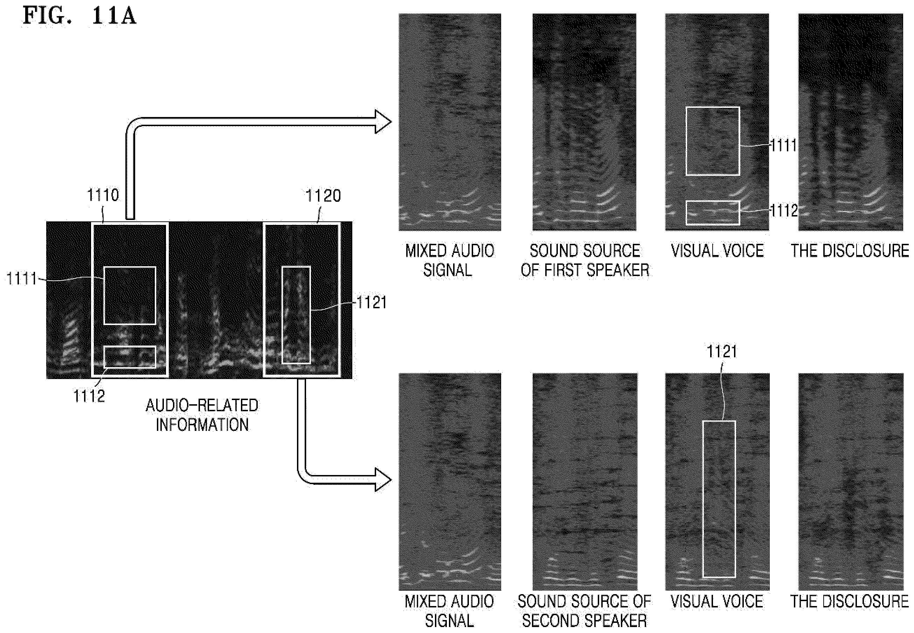

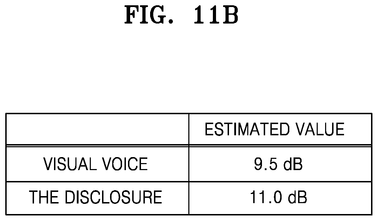

FIGS. 11a and 11b show experimental results of comparing the performance of an electronic device and method for processing a video, according to an embodiment of the disclosure, with the related art.

FIG. 11a shows qualitative comparison of a result of separating a sound source of a first speaker from the mixed audio signal, and FIG. 11b is a table showing the quantitative comparison. In FIGS. 11a and 11b, "VISUAL VOICE" was used as a related for comparison.

Referring to FIGS. 11a and 11b, in sound source classification according to the disclosure, audio-related information shown on the left was applied to a sound source separation model, and, in "VISUAL VOICE", the audio-related information was not applied to the sound source separation model. When the sound source of a first speaker is separated from the mixed audio signal in a first time-frequency region 1110, the sound source of a second speaker is included in regions 1111 and 1112 in "VISUAL VOICE", but, in a separation result according to the disclosure, the second speaker's sound source is rarely included. When the sound source of a first speaker is separated from the mixed audio signal in a second time-frequency region 1120, the sound source of the first speaker is included in a region 1121 in "VISUAL VOICE", but, in a separation result according to the disclosure, the first speaker's sound source is rarely included. As a result of quantitative comparison, the separation performance of the separation result according to the disclosure was improved by about 1.5 dB compared to the separation performance of "VISUAL VOICE".

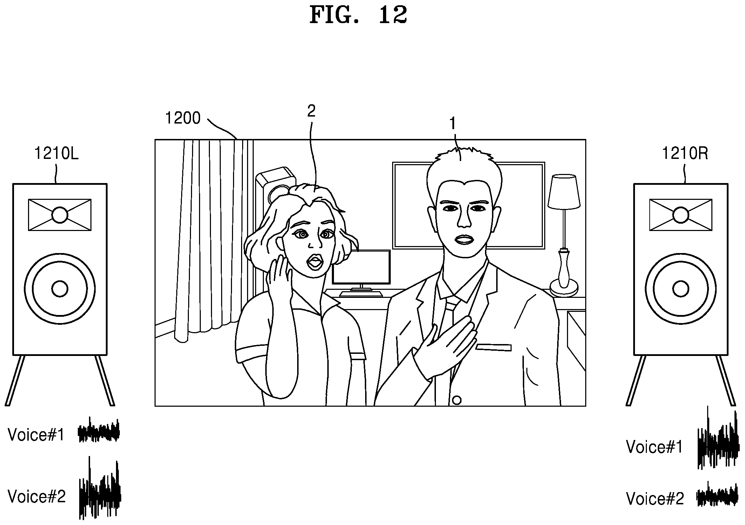

FIG. 12 illustrates a method of controlling playback of video based on a result of processing the video, according to an embodiment of the disclosure.

According to an embodiment of the disclosure, the electronic device 200 may control separated sound sources to be allocated to a plurality of speakers.

Referring to FIG. 12, in an example, two speakers 1 and 2 included in a screen 1200 output respective voices (sound sources), a first sound source Voice#1 corresponds to the first speaker 1, and a second sound source Voice #2 corresponds to the second speaker 2.

The electronic device 200 separates the first sound source Voice#1 and the second sound source Voice#2 from a mixed sound source by performing operations 910, 920, and 930 of FIG. 9.

Because the first speaker 1 is located on the right and the second speaker 2 is located on the left in an image, the electronic device 200 may match the first sound source Voice #1 and the second sound source Voice #2 with the first speaker 1 and the second speaker 2, respectively, and then control a left speaker 1210L to amplify and output the second sound source Voice #2 and a right speaker 1210R to amplify and output the first sound source Voice #1. A user may better feel the sense of presence or 3D sound due to a sound source output according to the speaker's location.

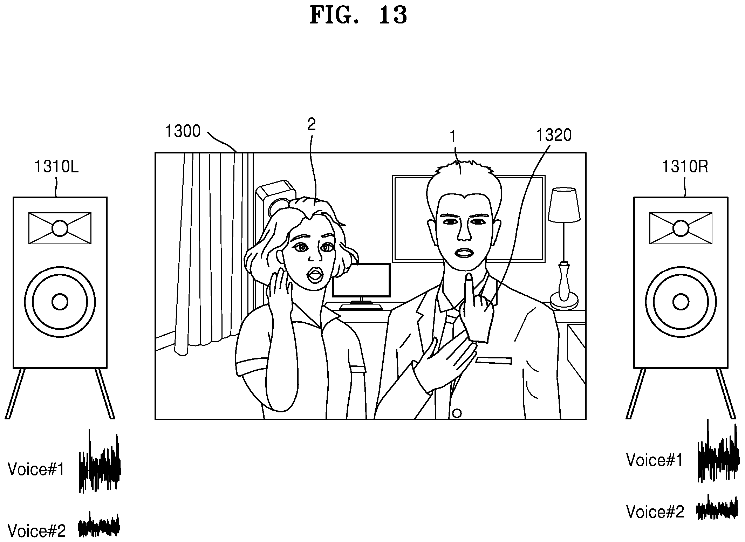

FIG. 13 illustrates a method of controlling playback of video based on a result of processing the video, according to an embodiment of the disclosure.

According to an embodiment, when the electronic device 200 receives a user input for selecting one from a plurality of speakers while playing video, the electronic device 200 may control the output of a sound source corresponding to the selected speaker among the plurality of sound sources to be emphasized.

Referring to FIG. 13, in an example, two speakers 1 and 2 included in a playback screen 1300 output respective voices, a first sound source Voice#1 corresponds to the first speaker 1, and a second sound source Voice #2 corresponds to the second speaker 2.

The electronic device 200 separates the first sound source Voice#1 and the second sound source Voice#2 from a mixed sound source by performing operations 910, 920, and 930 of FIG. 9.

When the user selects the first speaker 1 through a selection means 1320, such as a finger or mouse cursor, the electronic device 200 may control the first sound source Voice#1 corresponding to the first speaker 1 to be emphasized and output. Accordingly, the first sound source Voice #1 is amplified and output from both a left speaker 1310L and a right speaker 1310R.

In FIG. 13, both the first sound source Voice #1 and the second sound source Voice #2 are output through the two speakers 1310L and 1310R, but only the first voice #1 is amplified and output. However, when the first speaker 1 is selected, the electronic device 200 may control only the first sound source Voice#1 except for the second sound source Voice#2 to be output.

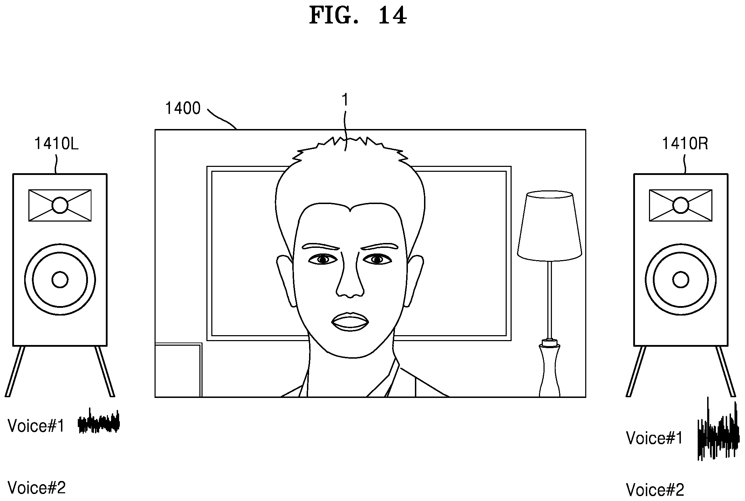

FIG. 14 illustrates a method of controlling playback of video based on a result of processing the video, according to an embodiment of the disclosure.

According to an embodiment, when the electronic device 200 receives a user input of zooming in an area where one of a plurality of speakers is displayed while playing video, the electronic device 200 may control the output of a sound source corresponding to an object included in the zoomed-in area among the plurality of sound sources to be emphasized.

Referring to FIG. 14, a playback screen 1400 is a screen obtained by magnifying an area including the first speaker 1 from the playback screen 1300 of FIG. 13. In an example, two speakers 1 and 2 included in the entire screen before the magnification output respective sound sources, a first sound source Voice#1 corresponds to the first speaker 1, and a second sound source Voice #2 corresponds to the second speaker 2.

The electronic device 200 separates the first sound source Voice#1 and the second sound source Voice#2 from a mixed sound source by performing operations 910, 920, and 930 of FIG. 9.

When the user magnifies the area including the first speaker 1 through a touch input or the like and thus the playback screen 1400 is displayed, such as a finger or mouse cursor, the electronic device 200 may control the first sound source Voice#1 corresponding to the first speaker 1 to be emphasized and output. Accordingly, only the first sound source Voice #1 is output from both a left speaker 1410L and a right speaker 1410R.

In FIG. 14, only the first sound source Voice #1 except for the second sound source Voice #2 is output through the two speakers 1410L and 1410R. However, the electronic device 200 may control both the first sound source Voice#1 and the second sound source Voice#2 to be output through the left speaker 1410L and the right speaker 1410R but only the first sound source Voice#1 to be amplified and output.

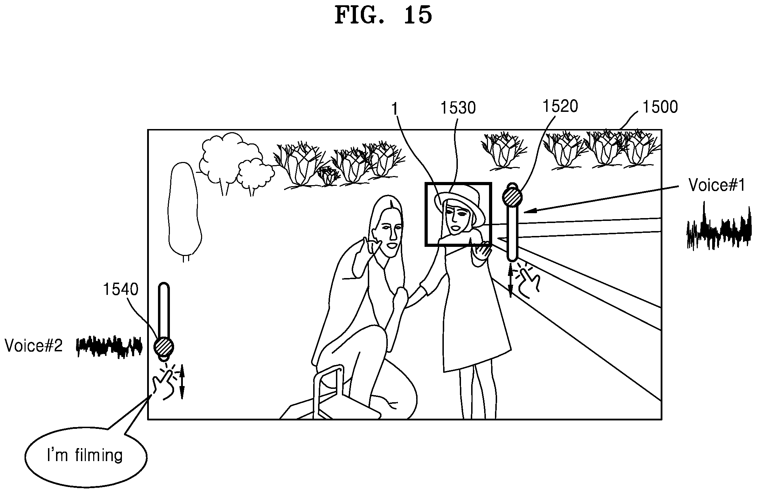

FIG. 15 illustrates a method of controlling playback of video based on a result of processing the video, according to an embodiment of the disclosure.

According to an embodiment, the electronic device 200 may display a screen on which video is played back, may receive a user input for selecting at least one speaker among a plurality of speakers corresponding to a plurality of sound sources included in a mixed audio signal, may display, on the screen, a user interface for adjusting the volume of at least one sound source corresponding to the selected at least one speaker and receive, from the user, adjustment of the volume of the at least one sound source. Based on the adjustment of the volume of the at least one sound source, the volume of at least one sound source, which is output through an audio output interface, may be adjusted.

Referring to FIG. 15, a playback screen 1500 is a screen on which video directly shot by the user is played back. In an example, the user's voice, such as "I'm filming", is recorded when video is shot, and the first sound source Voice#1 corresponds to the first speaker 1 included in the video, and the second sound source Voice #2 corresponds to the second speaker (i.e., a photographer) not included in the video.

The electronic device 200 separates the first sound source Voice#1 and the second sound source Voice#2 from a mixed sound source by performing operations 910, 920, and 930 of FIG. 9.

After the user allows interfaces 1520, 1530, and 1540 for selecting a speaker and adjusting the volume of a corresponding sound source to be displayed on the playback screen 1500 through a touch input or the like, the user may increase the first sound source Voice #1 corresponding to the first speaker 1. In response to a user input for lowering the volume of the second sound source Voice #2 corresponding to a second speaker outside the video, the electronic device 200 may control the first sound source Voice #1 corresponding to the first speaker 1 to be emphasized and output and the second sound source Voice #2 corresponding to the second speaker to be output with a small volume.

According to an aspect of the disclosure, an electronic device 200 for processing a video including an image signal and a mixed audio signal, the electronic device 200 includes: at least one processor 240; and a memory 250 configured to at least one program for processing the video. By executing the at least one program, the at least one processor 240 is configured to: generate, from the image signal and the mixed audio signal, audio-related information indicating a degree of overlap in a plurality of sound sources included in the mixed audio signal by using a first artificial intelligence (AI) model 310.

In an embodiment, the at least one processor 240 is configured to separate at least one of the plurality of sound sources included in the mixed audio signal from the mixed audio signal, by applying the audio-related information to a second AI model 320.

In an embodiment, the audio-related information includes a map indicating the degree of overlap in the plurality of sound sources, and each bin of the map has a probability value corresponding to a degree to which one of the plurality of sound sources overlap with another in a time-frequency domain.

In an embodiment, the first AI model 310 includes: first submodel 311 configured to generate, from the image signal, a plurality of pieces of mouth movement information representing temporal pronouncing information of a plurality of speakers corresponding to the plurality of sound sources; and a second submodel 312 configured to generate, from the mixed audio signal, the audio-related information, based on the plurality of pieces of mouth movement information.

In an embodiment, the first AI model 310 is trained by comparing training audio-related information estimated from a training image signal and a training audio signal with a ground truth, and wherein the ground truth is generated by a product operation between a plurality of probability maps generated from a plurality of spectrograms generated based on each of a plurality of individual training sound sources included in the training audio signal.

In an embodiment, each of the plurality of probability maps is generated by MaxClip $(\log(1 + \|F\|_2), 1)$, where $\|F\|_2$ is a size of a corresponding spectrogram from among the plurality of spectrograms, and MaxClip $(x, 1)$ is a function that outputs x when x is less than 1, and outputs 1 when x is equal to or greater than 1.

In an embodiment, the second AI model 320 includes an input layer, an encoder including a plurality of feature layers, and a bottleneck layer, and wherein the applying of the audio-related information to the second AI model 320 includes at least one of applying of the audio-related information to the input layer, applying of the audio-related information to each of the plurality of feature layers included in the encoder, or applying of the audio-related information to the bottleneck layer.

In an embodiment, the at least one processor 240 is further configured to: generate, from the mixed audio signal or from the mixed audio signal and visual information, number-of-speakers related information included in the mixed audio signal by using a third AI model; generate, from the image signal and the mixed audio signal, the audio-related information based on the number-of-speakers related information by using the first AI model 310; and separate, from the mixed audio signal, at least one of the plurality of sound sources included in the mixed audio signal by applying the number-of-speakers related information and the audio-related information to the second AI model 320.

In an embodiment, the visual information includes at least one key frame included in the image signal, and wherein the at least one key frame includes a facial area including lips of at least one speaker corresponding to at least one sound source included in the mixed audio signal.

In an embodiment, the number-of-speakers related information included in the mixed audio signal includes at least one of first number-of-speakers related information about the mixed audio signal or second number-of-speakers related information about the visual information.

In an embodiment, the first number-of-speakers related information includes a probability distribution of a number of speakers corresponding to the plurality of sound sources included in the mixed audio signal, and wherein the second number-of-speakers related information includes a probability distribution of the number of speakers included in the visual information.

In an embodiment, the applying of the number-of-speakers related information to the second AI model 320 includes at least one of applying of the number-of-speakers related information to the input layer, applying of the number-of-speakers related information to each of the plurality of feature layers included in the encoder, or applying of the number-of-speakers related information to the bottleneck layer.

In an embodiment, the at least one processor 240 is further configured to: obtain a plurality of pieces of mouth movement information associated with the plurality of speakers from the image signal; and separate, from the mixed audio signal, at least one of the plurality of sound sources included in the mixed audio signal by applying the obtained plurality of pieces of mouth movement information to the second AI model 320.

In an embodiment, the electronic device further includes: an input/output interface configured to display a screen on which the video is played back and receive, from a user, an input for selecting at least one speaker from among a plurality of speakers corresponding to the plurality of sound sources included in the mixed audio signal; and an audio output interface configured to output at least one sound source corresponding to the at least one speaker selected from among the plurality of sound sources included in the mixed audio signal.

In an embodiment, the at least one processor 240 is further configured to: display, on the screen, a user interface for adjusting a volume of at least one sound source corresponding to the selected at least one speaker and receive, from the user, adjustment of the volume of the at least one sound source; and based on the adjustment of the volume of the at least one sound source, adjust the volume of the at least one sound source that is output through the audio output interface.

According to an aspect of the disclosure, a method of processing a video including an image signal and a mixed audio signal, the method includes: generating, from the image signal and the mixed audio signal, audio-related information indicating a degree of overlap in a plurality of sound sources included in the mixed audio signal by using a first artificial intelligence (AI) model.

In an embodiment, the method includes separating, from the mixed audio signal, at least one of the plurality of sound sources included in the mixed audio signal by applying the audio-related information to a second AI model 320.

In an embodiment, the audio-related information includes a map indicating the degree of overlap in the plurality of sound sources, and each bin of the map has a probability value corresponding to a degree to which one of the plurality of sound sources overlap with another in a time-frequency domain.

In an embodiment, the generating of the audio-related information includes: generating, from the image signal, a plurality of pieces of mouth movement information representing temporal pronouncing information of a plurality of speakers corresponding to the plurality of sound sources included in the mixed audio signal; and generating, from the mixed audio signal, the audio-related information based on the plurality of pieces of mouth movement information.

In an embodiment, the second AI model 320 includes an input layer, an encoder including a plurality of feature layers, and a bottleneck layer, and wherein the applying of the audio-related information to the second AI model 320 includes at least one of applying of the audio-related information to the input layer, applying of the audio-related information to each of the plurality of feature layers included in the encoder, or applying of the audio-related information to the bottleneck layer.

In an embodiment, the method further includes: generating, from the mixed audio signal or from the mixed audio signal and visual information, number-of-speakers related information included in the mixed audio signal by using a third AI model; generating, from the image signal and the mixed audio signal, the audio-related information, based on the number-of-speakers related information, by using the first AI model 310; and separating, from the mixed audio signal, at least one of the plurality of sound sources included in the mixed audio signal, by applying the number-of-speakers related information and the audio-related information to the second AI model 320.

In an embodiment, the visual information includes at least one key frame included in the image signal, and wherein the at least one key frame includes a facial area including lips of at least one speaker corresponding to at least one sound source included in the mixed audio signal.

In an embodiment, wherein the applying of the number-of-speakers related information to the second AI model 320 includes at least one of applying of the number-of-speakers related information to the input layer, applying of the number-of-speakers related information to each of the plurality of feature layers included in the encoder, or applying of the number-of-speakers related information to the bottleneck layer.

According to an aspect of the disclosure, provided is a non-transitory computer-readable recording medium storing computer program for processing a video including an image signal and a mixed audio signal, which, when executed by at least one processor, may cause the at least one processor to execute: generating, from the image signal and the mixed audio signal, audio-related information indicating a degree of overlap in a plurality of sound sources included in the mixed audio signal by using a first artificial intelligence (AI) model; and separating, from the mixed audio signal, at least one of the plurality of sound sources included in the mixed audio signal by applying the audio-related information to a second AI model.

The machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

## Claims

1. An electronic device (200) for processing a video comprising an image signal and a mixed audio signal, the electronic device comprising:

   at least one processor (240); and
   a memory (250) configured to store at least one program for processing the video;
   wherein, by executing the at least one program, the at least one processor (240) is configured to:

   generate, from the image signal and the mixed audio signal, audio-related information indicating a degree of overlap in a plurality of sound sources included in the mixed audio signal by using a first artificial intelligence (AI) model (310); and
   separate at least one of the plurality of sound sources included in the mixed audio signal from the mixed audio signal, by applying the audio-related information to a second AI model (320).

2. The electronic device of claim 1, wherein the audio-related information comprises a map indicating the degree of overlap in the plurality of sound sources, and
   wherein each bin of the map has a probability value corresponding to a degree to which one of the plurality of sound sources overlap with another in a time-frequency domain.

3. The electronic device of claims 1 or 2, wherein the first AI model (310) comprises:

   a first submodel (311) configured to generate, from the image signal, a plurality of pieces of mouth movement information representing temporal pronouncing information of a plurality of speakers corresponding to the plurality of sound sources; and
   a second submodel (312) configured to generate, from the mixed audio signal, the audio-related information, based on the plurality of pieces of mouth movement information.

4. The electronic device of any one of claims 1 through 3, wherein the first AI model (310) is trained by comparing training audio-related information estimated from a training image signal and a training audio signal with a ground truth, and
   wherein the ground truth is generated by a product operation between a plurality of probability maps generated from a plurality of spectrograms generated based on each of a plurality of individual training sound sources included in the training audio signal.

5. The electronic device of any one of claims 1 through 4, wherein each of the plurality of probability maps is generated by MaxClip $(\log(1 + \|F\|_2), 1)$,
   where $\|F\|_2$ is a size of a corresponding spectrogram from among the plurality of spectrograms, and MaxClip $(x, 1)$ is a function that outputs x when x is less than 1, and outputs 1 when x is equal to or greater than 1.

6. The electronic device of any one of claims 1 through 5, wherein the second AI model (320) comprises an input layer (321), an encoder (322) including a plurality of feature layers, and a bottleneck layer (323), and
   wherein the applying of the audio-related information to the second AI model comprises at least one of applying of the audio-related information to the input layer (321), applying of the audio-related information to each of the plurality of feature layers included in the encoder (322), or applying of the audio-related information to the bottleneck layer (323).

7. The electronic device of any one of claims 1 through 6, wherein the at least one processor (240) is further configured to:

   generate, from the mixed audio signal or from the mixed audio signal and visual information, number-of-speakers related information included in the mixed audio signal by using a third AI model (330);
   generate, from the image signal and the mixed audio signal, the audio-related information based on the number-of-speakers related information by using the first AI model (310); and
   separate, from the mixed audio signal, at least one of the plurality of sound sources included in the mixed audio signal by applying the number-of-speakers related information and the audio-related information to the second AI model (320),
   wherein the visual information comprises at least one key frame included in the image signal, and
   wherein the at least one key frame comprises a facial area including lips of at least one speaker corresponding to at least one sound source included in the mixed audio signal.

8. The electronic device of any one of claims 1 through 7, wherein the number-of-speakers related information included in the mixed audio signal comprises at least one of first number-of-speakers related information about the mixed audio signal or second number-of-speakers related information about the visual information.

9. The electronic device of any one of claims 1 through 8, wherein the first number-of-speakers related information comprises a probability distribution of a number of speakers corresponding to the plurality of sound sources included in the mixed audio signal, and
wherein the second number-of-speakers related information comprises a probability distribution of the number of speakers included in the visual information.

10. The electronic device of any one of claims 1 through 9, wherein the second AI model (320) comprises an input layer (321), an encoder (322) including a plurality of feature layers, and a bottleneck layer (323), and
wherein the applying of the number-of-speakers related information to the second AI model (320) comprises at least one of applying of the number-of-speakers related information to the input layer (321), applying of the number-of-speakers related information to each of the plurality of feature layers included in the encoder (322), or applying of the number-of-speakers related information to the bottleneck layer (323).

11. The electronic device of any one of claims 1 through 10, wherein the at least one processor (240) is further configured to:

obtain a plurality of pieces of mouth movement information associated with the plurality of speakers from the image signal; and
separate, from the mixed audio signal, at least one of the plurality of sound sources included in the mixed audio signal by applying the obtained plurality of pieces of mouth movement information to the second AI model.

12. The electronic device of any one of claims 1 through 11, further comprising:

an input/output interface (220) configured to display a screen on which the video is played back and receive, from a user, an input for selecting at least one speaker from among a plurality of speakers corresponding to the plurality of sound sources included in the mixed audio signal; and
an audio output interface (230) configured to output at least one sound source corresponding to the at least one speaker selected from among the plurality of sound sources included in the mixed audio signal.

13. The electronic device of any one of claims 1 through 12, wherein the at least one processor (240) is further configured to:

display, on the screen, a user interface for adjusting a volume of at least one sound source corresponding to the selected at least one speaker and receive, from the user, adjustment of the volume of the at least one sound source; and
based on the adjustment of the volume of the at least one sound source, adjust the volume of the at least one sound source that is output through the audio output interface (230).

14. A method (900) of processing a video including an image signal and a mixed audio signal, the method comprising:

generating, from the image signal and the mixed audio signal, audio-related information indicating a degree of overlap in a plurality of sound sources included in the mixed audio signal by using a first artificial intelligence (AI) model (310); and
separating, from the mixed audio signal, at least one of the plurality of sound sources included in the mixed audio signal by applying the audio-related information to a second AI model (320).

15. A computer-readable recording medium storing computer program that, when executed by at least one processor, causes the at least one processor to perform the method of claim 14.

FIG. 1

EP 4 557 282 A1

# FIG. 2

200

210
COMMUNICATION INTERFACE

220
INPUT/OUTPUT INTERFACE

230
AUDIO OUTPUT INTERFACE

240
PROCESSOR

250
MEMORY

FIG. 3

# FIG. 4A

MIXED AUDIO SIGNAL

STFT

310

312

U-net

311

Lip feature net

IMAGE SIGNAL

AUDIO-RELATED INFORMATION

# FIG. 4B

# FIG. 4C

MIXED AUDIO SIGNAL → STFT → [spectrogram] → U-net (312) → AUDIO-RELATED INFORMATION

Inside U-net: 2D Conv/Relu | 2D Conv/Down (× 6) → Concat → Up/2D Conv | 2D Conv/Relu (× 6)

TEMPORAL PRONOUNCING INFORMATION

EP 4 557 282 A1

FIG. 5

MIXED AUDIO SIGNAL → STFT → 320 [2D Conv/Relu (321) → Down → 2D Conv/Relu (322, 323) → Up → 2D Conv/Relu] → ISTFT → SEPARATED SOUND SOURCE

× 5    × 5

Mask

510    520    530

AUDIO-RELATED INFORMATION

EP 4 557 282 A1

# FIG. 6A

MIXED AUDIO
SIGNAL

330

NUMBER-OF-
SPEAKERS
ANALYSIS MODEL

No speaker
1 speaker
2 speaker
3 speaker
4 speaker

NUMBER-OF-
SPEAKERS RELATED
INFORMATION

# FIG. 6B

VISUAL INFORMATION(key frame)

330

MIXED AUDIO
SIGNAL

NUMBER-OF-
SPEAKERS
ANALYSIS MODEL

No speaker
1 speaker
2 speaker
3 speaker
4 speaker

No speaker
1 speaker
2 speaker
3 speaker
4 speaker

NUMBER-OF-
SPEAKERS RELATED
INFORMATION

# FIG. 7

MIXED AUDIO SIGNAL

STFT

320

321 2D Conv/Relu

322 Down

323 2D Conv/Relu

Up

2D Conv/Relu

× 5   × 5

ISTFT

SEPARATED SOUND SOURCE

Mask

710   720   730

No speaker
1 speaker
2 speaker
3 speaker
4 speaker

No speaker
1 speaker
2 speaker
3 speaker
4 speaker

NUMBER-OF-SPEAKERS RELATED INFORMATION

EP 4 557 282 A1

# FIG. 8

# FIG. 9

900

START

GENERATE NUMBER-OF-SPEAKERS RELATED
INFORMATION INCLUDED IN MIXED AUDIO SIGNAL FROM
MIXED AUDIO SIGNAL OR FROM MIXED AUDIO SIGNAL
AND VISUAL INFORMATION BY USING THIRD MODEL — 910

GENERATE AUDIO-RELATED INFORMATION INDICATING
DEGREE OF OVERLAP OF PLURALITY OF SOUND SOURCES
INCLUDED IN MIXED AUDIO SIGNAL FROM IMAGE SIGNAL
AND MIXED AUDIO SIGNAL BY USING FIRST MODEL — 920

SEPARATE AT LEAST ONE SOUND SOURCE AMONG
PLURALITY OF SOUND SOURCES INCLUDED IN MIXED
AUDIO SIGNAL FROM MIXED AUDIO SIGNAL, BY APPLYING
AUDIO-RELATED INFORMATION TO SECOND MODEL — 930

END

# FIG. 10A

| | MIXED AUDIO SIGNAL | GROUND TRUTH | AUDIO-RELATED INFORMATION |
| --- | --- | --- | --- |
| Case 1 | | | |
| Case 2 | | | |
| Case 3 | | | |

# FIG. 10B

| | Estimated value |
|---|---|
| Accuracy<br>(True if less than 0.15) | 97.27% |
| F-measure | 0.77 |

# FIG. 11A

AUDIO-RELATED
INFORMATION

MIXED AUDIO
SIGNAL

SOUND SOURCE
OF FIRST SPEAKER

VISUAL VOICE

THE DISCLOSURE

MIXED AUDIO
SIGNAL

SOUND SOURCE OF
SECOND SPEAKER

VISUAL VOICE

THE DISCLOSURE

EP 4 557 282 A1

# FIG. 11B

| | ESTIMATED VALUE |
|---|---|
| VISUAL VOICE | 9.5 dB |
| THE DISCLOSURE | 11.0 dB |

## FIG. 12

EP 4 557 282 A1

FIG. 13

EP 4 557 282 A1

# FIG. 14

1400

1

1410L

1410R

Voice#1

Voice#2

Voice#1

Voice#2

EP 4 557 282 A1

EP 4 557 282 A1

# FIG. 15

## INTERNATIONAL SEARCH REPORT

| International application No. |
|---|
| **PCT/KR2023/016060** |

**A.    CLASSIFICATION OF SUBJECT MATTER**

**G10L 21/0272**(2013.01)i; **G10L 25/30**(2013.01)i; **G10L 25/18**(2013.01)i; **G10L 17/02**(2013.01)i; **G10L 15/25**(2013.01)i; **H04N 21/439**(2011.01)i; **G06N 3/045**(2023.01)i

According to International Patent Classification (IPC) or to both national classification and IPC

**B.    FIELDS SEARCHED**

Minimum documentation searched (classification system followed by classification symbols)

G10L 21/0272(2013.01); G06F 16/70(2019.01); G06F 40/10(2020.01); G06F 40/20(2020.01); G10L 15/02(2006.01); G10L 15/22(2006.01); G10L 15/25(2013.01); G10L 17/04(2013.01); H04N 21/43(2011.01); H04N 21/434(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동영상(video), 인공지능 모델(artificial intelligence model), 이미지(image), 오디오 (audio), 정보(information), 음원(sound source), 겹침(overlap), 분리(separate), 화자(speaker)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0064597 A (SEOUL NATIONAL UNIVERSITY R&DB FOUNDATION) 03 June 2021 (2021-06-03)<br>    See paragraphs [0017]-[0059]; and figures 1-2. | 1,3,6,11-15 |
| A | | 2,4-5,7-10 |
| Y | KR 10-2020-0107758 A (LG ELECTRONICS INC.) 16 September 2020 (2020-09-16)<br>    See paragraphs [0013]-[0089]; and figure 9. | 1,3,6,11-15 |
| A | KR 10-2022-0138669 A (SAMSUNG ELECTRONICS CO., LTD.) 13 October 2022 (2022-10-13)<br>    See paragraphs [0047]-[0048] and [0080]; and figures 7a-7b. | 1-15 |
| A | KR 10-2020-0129934 A (NAVER CORPORATION et al.) 18 November 2020 (2020-11-18)<br>    See paragraphs [0010] and [0101]; and figure 4. | 1-15 |

| ✓ Further documents are listed in the continuation of Box C. | ✓ See patent family annex. |
|---|---|

\*     Special categories of cited documents:
"A"    document defining the general state of the art which is not considered to be of particular relevance
"D"    document cited by the applicant in the international application
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| **18 January 2024** | **22 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/016060** |

| C. | DOCUMENTS CONSIDERED TO BE RELEVANT | | |
|---|---|---|---|
| Category* | Citation of document, with indication, where appropriate, of the relevant passages | | Relevant to claim No. |
| A | US 2018-0144746 A1 (AFFECTIVA, INC.) 24 May 2018 (2018-05-24)<br>See paragraphs [0053] and [0120]; and figure 1. | | 1-15 |

Form PCT/ISA/210 (second sheet) (July 2022)

INTERNATIONAL SEARCH REPORT
Information on patent family members

International application No.

**PCT/KR2023/016060**

| Patent document cited in search report | | | Publication date (day/month/year) | Patent family member(s) | | | Publication date (day/month/year) |
|---|---|---|---|---|---|---|---|
| KR | 10-2021-0064597 | A | 03 June 2021 | KR | 10-2294817 | B1 | 26 August 2021 |
| KR | 10-2020-0107758 | A | 16 September 2020 | CN | 111666802 | A | 15 September 2020 |
| | | | | CN | 111669696 | A | 15 September 2020 |
| | | | | EP | 3706442 | A1 | 09 September 2020 |
| | | | | EP | 3706443 | A1 | 09 September 2020 |
| | | | | KR | 10-2020-0107757 | A | 16 September 2020 |
| | | | | US | 11277702 | B2 | 15 March 2022 |
| | | | | US | 2020-0288255 | A1 | 10 September 2020 |
| | | | | US | 2020-0288256 | A1 | 10 September 2020 |
| KR | 10-2022-0138669 | A | 13 October 2022 | WO | 2022-216059 | A1 | 13 October 2022 |
| KR | 10-2020-0129934 | A | 18 November 2020 | JP | 2020-187346 | A | 19 November 2020 |
| | | | | JP | 6999734 | B2 | 19 January 2022 |
| | | | | KR | 10-2230667 | B1 | 22 March 2021 |
| US | 2018-0144746 | A1 | 24 May 2018 | CN | 102933136 | A | 13 February 2013 |
| | | | | CN | 104054099 | A | 17 September 2014 |
| | | | | EP | 2580732 | A1 | 17 April 2013 |
| | | | | EP | 2678820 | A2 | 01 January 2014 |
| | | | | JP | 2013-537435 | A | 03 October 2013 |
| | | | | JP | 2014-501967 | A | 23 January 2014 |
| | | | | JP | 2015-505087 | A | 16 February 2015 |
| | | | | KR | 10-2013-0122535 | A | 07 November 2013 |
| | | | | KR | 10-2014-0004639 | A | 13 January 2014 |
| | | | | US | 2011-0301433 | A1 | 08 December 2011 |
| | | | | US | 2012-0083675 | A1 | 05 April 2012 |
| | | | | US | 2013-0052621 | A1 | 28 February 2013 |
| | | | | US | 2014-0016860 | A1 | 16 January 2014 |
| | | | | US | 2015-0099987 | A1 | 09 April 2015 |
| | | | | US | 2016-0004904 | A1 | 07 January 2016 |
| | | | | US | 2017-0011258 | A1 | 12 January 2017 |
| | | | | US | 2018-0035938 | A1 | 08 February 2018 |
| | | | | US | 2019-0012599 | A1 | 10 January 2019 |
| | | | | US | 2020-0026347 | A1 | 23 January 2020 |
| | | | | US | 2021-0001862 | A1 | 07 January 2021 |
| | | | | US | 2022-0067519 | A1 | 03 March 2022 |
| | | | | US | 2023-0033776 | A1 | 02 February 2023 |
| | | | | WO | 2011-156272 | A1 | 15 December 2011 |
| | | | | WO | 2012-044883 | A2 | 05 April 2012 |
| | | | | WO | 2013-044185 | A2 | 28 March 2013 |
| | | | | WO | 2014-066871 | A1 | 01 May 2014 |
| | | | | WO | 2015-023952 | A1 | 19 February 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Visualvoice: Audio-visual speech separation with cross-modal consistency. **GAO, RUOHAN** ; **GRAUMAN, KRISTEN**. 2021 IEEE/CVF Conference on Computer Vision and Pattern Recognition (CVPR). IEEE, 2021, 15490-15500